# EUROPÄISCHE PATENTSCHRIFT

(11) **EP 3 589 856 B1**
(45) Veröffentlichungstag und Bekanntmachung des Hinweises auf die Patenterteilung: **07.07.2021**
(21) Anmeldenummer: 18705340.0
(22) Anmeldetag: 05.02.2018
(51) Int. Cl.: F16D 23/14

(54) **KRAFTFAHRZEUGKUPPLUNG MIT KUPPLUNGSLAGERUNG MIT AUSRICHTUNGSELEMENT FÜR KUPPLUNGSFEDER**
VEHICLE CLUTCH WITH CLUTCH BEARING HAVING ALIGNMENT ELEMENT FOR CLUTCH SPRING
EMBRAYAGE DE VEHICULE AVEC SUPPORT D'EMBRAYAGE AVEC ÉLÉMENT D'ALIGNEMENT POUR RESSORT D'EMBRAYAGE

(30) Priorität: 01.03.2017 DE 102017104201
(43) Veröffentlichungstag der Anmeldung: 08.01.2020
(73) Patentinhaber: KNORR-BREMSE Systeme für Nutzfahrzeuge GmbH, 80809 München (DE)
(72) Erfinder: SAINTIVE, Michel, 14340 Le Pré d'Auge (FR); MARESCOT, Jean-Baptiste, 14340 Manerbe (FR); AMIOT, Frederic, 14290 Saint-Cyr-du-Ronceray (FR); MELLAR, Jörg, 85560 Ebersberg (DE)
(86) Internationale Anmeldenummer: PCT/EP2018/052804
(87) Internationale Veröffentlichungsnummer: WO 2018/158044

(56) Entgegenhaltungen:
- DE-A1- 3 715 369
- DE-A1-102006 024 084
- DE-A1-102013 210 371
- GB-A- 1 221 761
- US-A- 5 992 598

## Beschreibung

Die vorliegende Erfindung bezieht sich auf eine Kraftfahrzeugkupplung mit Kupplungslagerung mit einem Ausrichtungselement für eine Kupplungsfeder, die als Tellerfeder ausgeführt ist.

Kupplungen werden in Kraftfahrzeugen dazu eingesetzt, um bei Bedarf einen Kraftschluss zwischen einem Antriebsaggregat und einem Getriebe zu trennen. Des Weiteren werden Kupplungen in Kraftfahrzeugen außerdem dazu eingesetzt, bei Bedarf den Kraftschluss zwischen dem Antriebsaggregat und einem Nebenaggregat zu trennen. Ein solches Nebenaggregat kann beispielsweise ein Luftverdichter bzw. ein Kompressor sein. Insbesondere Nutzfahrzeuge wie Lastkraftwagen oder Omnibusse sind üblicherweise mit einer Luftdruckbremsanlage ausgerüstet, die komprimierte Luft für ihren Betrieb benötigt. Diese Fahrzeuge weisen neben einem Kompressor des Weiteren einen Luftdruckspeicher auf. Falls dieser Luftdruckspeicher während des Betriebs des Fahrzeuges mit komprimierter Luft gefüllt ist und ein vorbestimmter Soll-Innendruck vorliegt, ist ein Antreiben des Kompressors durch das Antriebsaggregat temporär nicht mehr notwendig, so lange, bis der Soll-Innendruck durch Betrieb der Luftverbraucher wieder unterschritten wird. Vielmehr ist ein Antreiben des Kompressors zu diesem Zeitpunkt sogar unerwünscht, da durch ein unnötiges Antreiben zusätzlich Energie verbraucht wird.

Eine solche Kupplung, die zwischen einem Antriebsaggregat und einem Kompressor angeordnet ist, ist typischerweise als Lamellenkupplung ausgeführt und weist mehrere Reibscheiben auf. Diese Reibscheiben werden zum Erreichen eines geschlossenen (kraftschlüssigen) Kupplungszustands mittels einer oder mehrerer Tellerfedern aneinander gepresst. Zum Öffnen der Kupplung wird mittels eines pneumatischen Aktuators eine Gegenkraft auf die Tellerfedern aufgebaut, so dass die Reibscheiben von der Federkraft der Tellerfedern entlastet werden.

Ein technisches Problem besteht hierbei darin, dass die Position der Tellerfedern innerhalb der Kupplung festgelegt sein muss, um Verschleiß zwischen den Tellerfedern und der mit diesen in Kontakt stehenden Bauteilen zu verringern. Genauer gesagt muss die Position der Tellerfedern bezüglich des restlichen Kupplungsaufbaus, insbesondere bezüglich der Kupplungsnabe, festgelegt werden. Die Tellerfedern dürfen in einem eingebauten Zustand bezüglich der Kupplungsnabe folglich nicht drehbar sowie nicht radial verschieblich sein.

In EP 1 995 482 A1 wird die drehfeste Verbindung zwischen Kupplungsnabe und Tellerfedern dadurch erreicht, dass die Kupplungsnabe an mehreren Stellen einen Schlitz in axialer Richtung aufweist, in den die Tellerfedern eingreifen. Des Weiteren werden die Tellerfedern an Ihrem Außendurchmesser radial an der Nabensicherung zentriert, so dass keine Bewegung der Tellerfedern in radialer Richtung der Nabe möglich ist. Bei einer solchen Konstruktion muss ein hoher Toleranzwert bei der radialen Zentrierung der Tellerfedern vorgesehen werden, da nicht direkt an der Nabe, sondern an der Nabensicherung (oder am Kupplungskorb) zentriert wird. Die Position der einzelnen Federn untereinander und gegenüber der Lagerung ist hierdurch nicht exakt festgelegt, so dass ein erhöhter Verschleiß an den Fingern und an den Federn auftritt. Ein weiterer Nachteil dieser Konstruktion besteht darin, dass beim Betätigen der Kupplung eine Relativbewegung zwischen Lagerung und Feder auftreten kann, was ebenfalls zu Verschleiß führt.

In EP 2 123 929 B1 wird lediglich eine Tellerfeder verwendet, um Verschleißerscheinungen zwischen andernfalls vorhandenen mehreren Tellerfedern untereinander zu vermeiden. Um eine drehfeste Zentrierung zwischen dem Ausgangselement 32 und der Tellerfeder zu erreichen, weist das Ausgangselement 32 drei nutenartige Einsenkungen 114 auf, in welche jeweils eine Federzunge 112 (siehe Fig. 4 von EP 2 123 929 B1), die in radialer Richtung länger ausgeführt ist als die restlichen Federzungen, eingreift. Die Zentrierung bzw. Festlegung der Tellerfeder in radialer Richtung erfolgt an ihrem äußeren Umfang. Bei einer solchen Konstruktion ist zwar die Feder auf der Nabe und hierdurch mit einem geringen Toleranzwert zentriert. Allerdings kann auch hier beim Betätigen der Kupplung eine Relativbewegung zwischen Lagerung und Feder auftreten, was den Verschleiß erhöht.

Die DE 10 2006 024 084 A1 offenbart ein Kupplungsrücklager, das mittels einer Anlaufscheibe in Kontakt mit Federzungen einer Tellerfeder ist, wobei umfangsseitig an der Anlaufscheibe verteilt angeordnete Rippen formschlüssig in Schlitze zwischen unmittelbar umfangsseitig zueinander benachbarten Federzungen eingreifen. Die Rippen sind jedoch spielbehaftet, so dass auch hier ein erhöhter Verschleiß auftreten kann.

Die US 5,992,598 betrifft eine Ausrückvorrichtung, die eine Membranfeder, die eine mittige Öffnung aufweist und in radial nach innen gerichtete Finger aufgeschnitten ist, ein Ausrückwälzlager und ein Betätigungselement aufweist, das an einem Teil angebracht ist, das von dem Teil, an dem die Membranfeder befestigt ist, gesondert ist und das zumindest in axialer Richtung mit dem Wälzlager in Berührung steht. Das Wälzlager enthält einen umlaufenden Ring, der sich mit einem radialen Abschnitt an dem inneren Ende der Finger der Membranfeder abstützt, einen stillstehenden Ring, bei dem ein radialer Abschnitt mit dem Betätigungselement in Berührung steht, und eine Reihe von Wälzkörpern.

In der DE 10 2013 210 371 A1 wird eine Kupplungsvorrichtung mit einer Kupplung mit Betätigungselementen, einem Ausrücklager und einer Kopplungsvorrichtung zur Kopplung des Ausrücklagers mit den Betätigungselementen der Kupplung, wobei die Kopplungsvorrichtung das Ausrücklager formschlüssig aufnimmt und Mittel zur Kraftübertragung in Druckrichtung und Mittel zur Kraftübertragung in Zugrichtung umfasst, offenbart.

Die DE 37 15 369 C2 bezieht sich auf eine "gezogene" Kupplungseinrichtung zum lösbaren Verbinden eines Lagerringes mit einer Membranfeder, die einen zylindrischen Abschnitt des Lagerringes umgibt und mit einer Anzahl von radial nach innen gerichteten, in Umfangsrichtung im Abstand voneinander angeordneten Zungen versehen ist und der zylindrische Abschnitt eine Anzahl von radial nach außen gerichteten Vorsprüngen aufweist und die Abstände zwischen den Vorsprüngen in Umfangsrichtung so groß sind, daß sie den Abständen zwischen den Zungen entsprechen und die Vorsprünge axial hindurchgeschoben werden können sowie ein axial federndes Element vorgesehen ist, das sich am Lagerring abstützt, an der Membranfeder anliegt und mit Haltefingern in die Räume zwischen den Vorsprüngen und den Zungen der Membranfeder eingreift.

Die GB 1 221 761 betrifft eine trockene Reibungskupplung, insbesondere für Kraftfahrzeuge, mit einer Tellerfeder mit mehreren Federzungen und einer Ausrückplatte, wobei die Ausrückplatte mit einem zylindrischen Vorsprung versehen ist, der an seinem Rand einen Flansch aufweist, der als Widerlager gegen die Federzungen ausgebildet ist und an bestimmten Stellen axial verlaufende Ausnehmungen aufweist, die den Flansch unterbrechen und in die jeweils eine Federzunge der Tellerfeder hineinragt, die aus der Normalstellung herausgedrückt wird.

Wenigstens eines der obigen Probleme wird durch eine Kraftfahrzeugkupplung gemäß des unabhängigen Anspruchs gelöst.

Vorteilhafte Weiterbildungen sind Gegenstand der Unteransprüche.

Durch eine erfindungsgemäße Ausgestaltung der Kraftfahrzeugkupplung, der Lagerung, sowie der Tellerfeder(n) wird eine Ausrichtung/Zentrierung der Tellerfeder(n) innerhalb der Kraftfahrzeugkupplung erreicht, durch welche ein verbessertes Verschleißverhalten der Tellerfedern selbst sowie der mit diesen in Kontakt stehenden Teilen realisierbar ist. Die Tellerfedern sind auf Grund der erfindungsgemäßen Ausgestaltung weder bezüglich einander, noch bezüglich der Lagerung um die Kupplungsachse drehbar. Insbesondere die verschleißempfindlichen Federzungen der Tellerfedern werden hierdurch geschont. Insbesondere wird Verschleiß zwischen den Federzungen und ihrer Kontaktfläche mit der Lagerung vermindert, da die Bewegungsmöglichkeit zwischen Federzungen und Lagerung minimiert wird. Des Weiteren wird Verschleiß zwischen dem radial außenliegenden Bereich der Tellerfedern und der Nabe minimiert.

Zudem wird der Hubweg der Lagerung zum Öffnen der Kraftfahrzeugkupplung durch einen direkten Kontakt (axialer Anschlag) zwischen Lagerung (insbesondere der Zapfen der Lagerung) und der axial unverschieblichen Nabe erreicht, wodurch der maximale axiale Federweg der Tellerfedern begrenzt wird. Dadurch werden die Tellerfedern geschont. Des Weiteren wird hierdurch die Steuerung des Betätigens der Kupplung vereinfacht.

Gemäß einer vorteilhaften Ausgestaltung weist die Lagerung einen sich in axialer Richtung der Kupplung erstreckenden Kragen auf, der radial zwischen der Nabe und der/den Tellerfeder(n) angeordnet ist. Hierdurch wird ein Reibkontakt zwischen der/den radial innenliegenden Kante(n) der Tellerfeder(n) und der Nabe verhindert, wodurch Verschleiß reduziert wird.

Nachfolgend werden anhand von Figuren mehrere erfindungsgemäße Ausgestaltungen erläutert.
Fig. 1 zeigt eine erfindungsgemäße Kraftfahrzeugkupplung in drei Schnittansichten in einem geschlossen Kupplungszustand.
Fig. 2 zeigt die erfindungsgemäße Kraftfahrzeugkupplung in drei Schnittansichten in einem geöffneten Kupplungszustand.
Fig. 3 zeigt die erfindungsgemäße Kraftfahrzeugkupplung in einer geschnittenen Detailansicht.
Fig. 4 zeigt mehrere Ausführungsformen einer Lagerung mit Tellerfeder einer erfindungsgemäßen Kraftfahrzeugkupplung.
Fig. 5a zeigt eine isometrische Ansicht einer Lagerung einer erfindungsgemäßen Kraftfahrzeugkupplung.
Fig. 5b zeigt eine isometrische Ansicht einer Lagerung mit Kragen einer erfindungsgemäßen Kraftfahrzeugkupplung.
Fig. 5c zeigt eine Tellerfeder einer erfindungsgemäßen Kraftfahrzeugkupplung.

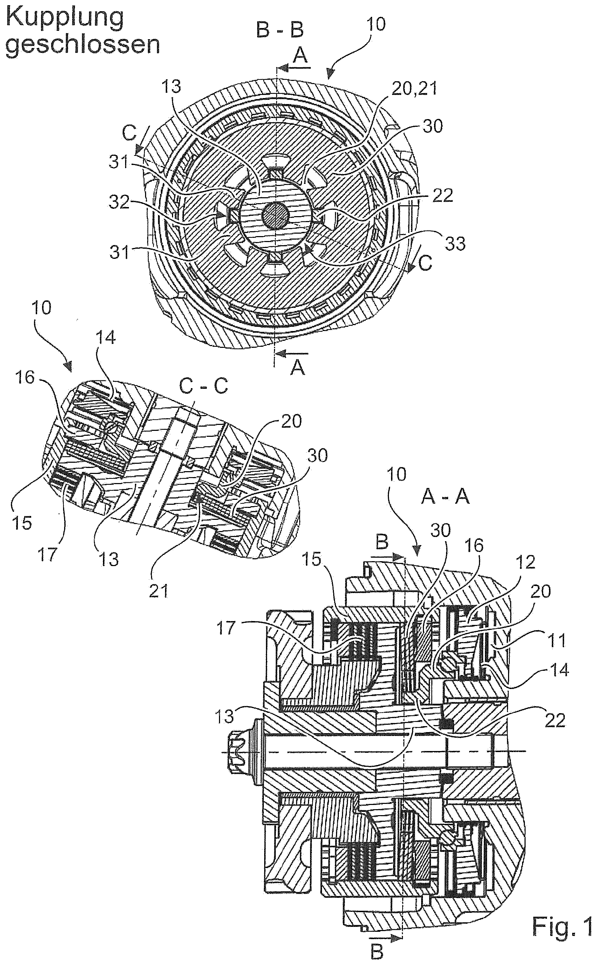

**Fig. 1** zeigt drei Schnittansichten einer erfindungsgemäßen Kraftfahrzeugkupplung 10 zum kraftschlüssigen Verbinden eines Hauptaggregats mit einem Kompressor. Die Kraftfahrzeugkupplung 10 ist in einem geschlossenen Kupplungszustand dargestellt. Ein geschlossener Kupplungszustand bedeutet, dass zu diesem Zeitpunkt durch die Kraftfahrzeugkupplung eine kraftschlüssige Verbindung zwischen dem Hauptaggregat und dem Kompressor hergestellt ist. Das Lamellenpaket 17 der Kraftfahrzeugkupplung 10 ist dabei zusammengeschoben, die einzelnen Reiblamellen bewegen sich als Ganzes. In der oben dargestellten Schnittansicht B-B sind die Schnitte A-A sowie C-C eingezeichnet, welche unterhalb dargestellt sind. Fig. 1 zeigt einen montierten Zustand der Kraftfahrzeugkupplung 10, wobei drei Tellerfedern 30 und eine Lagerung 20 in einem montierten Zustand gezeigt sind. In der Schnittansicht B-B ist eine Tellerfeder 30 mit einem kreisrunden Außenumfang dargestellt. Die Tellerfeder 30 weist an ihrem Innenumfang symmetrisch angeordnete Federzungen 31 auf. Zwischen den einzelnen Federzungen 31 ist jeweils ein Abstand ausgebildet. Dieser Abstand wird entweder durch einen Zwischenraum 33 zwischen den Federzungen 31 ausgebildet, oder durch eine Ausnehmung 32 zwischen den Federzungen 31. Dabei ist die Geometrie einer Ausnehmung 32 an die Geometrie eines Zapfens 22 der Lagerung 20 angepasst. Zwischen den Flanken jeder Ausnehmung 32 steht ein Zapfen 22 mit der Tellerfeder 30 in Eingriff. Durch die Zwischenräume 33 hindurch ist eine teilweise durch die Tellerfeder 30 verdeckte Kontaktfläche 21 der Lagerung 10 zu erkennen. Im Zentrum der Schnittansicht B-B ist des Weiteren eine Nabe 13 dargestellt.

In der Schnittansicht C-C ist die prinzipielle Funktionsweise der Kraftfahrzeugkupplung 10 dargestellt. Der Schnitt C-C verläuft hierbei durch zwei Federzungen 31 hindurch. Durch die Tellerfedern 30 wird eine Federkraft auf die Lagerung 20 ausgeübt, über einen Flächenkontakt zwischen dem radial innenliegenden Bereich der Tellerfedern 30, genauer zwischen dem radial innenliegenden Bereich der Federzungen 31, und der Kontaktfläche 21 der Lagerung 20. Des Weiteren üben die Tellerfedern 30 über einen Flächenkontakt zwischen ihrem radial außenliegenden Bereich eine Federkraft auf die Nabe 13 aus. Die Federkräfte bewirken in dieser Konstellation einen geschlossenen Kupplungszustand, da die Tellerfedern 30 in einem Bereich, der zwischen ihren radial außenliegenden Bereichen und ihren radial innenliegenden Bereichen liegt, eine Federkraft auf einen Ausrückring 16 ausüben, der mit einem axial verschieblichen Kupplungskorb 15 fest verbunden ist. An dem axial verschieblichen Kupplungskorb 15 sind Außenlamellen der Kupplung befestigt, welche Teil des Lamellenpakets 17 sind. Die Federkräfte der Tellerfedern 30 drücken den Ausrückring 16 mit dem Kupplungskorb 15 (bezüglich der Schnittansicht A-A) nach rechts, wodurch das Lamellenpaket 17 ebenfalls nach rechts gedrückt werden, gegen die axial unverschiebliche Nabe 13. Dadurch befindet sich die Kraftfahrzeugkupplung 10 in einem geschlossenen Kupplungszustand.

Durch die Anordnung von mehr als zwei Zapfen 22 an der Lagerung 20, in dem hier gezeigten Ausführungsbeispiel von vier Zapfen 22, werden die Tellerfedern 30 auf der Lagerung 20 zentriert. Schnitt B-B zeigt folglich die Zentrierung der Tellerfedern 30 auf der Lagerung 20, wobei Schnitt C-C die durch die Federkräfte verursachte Verspannung zwischen Lagerung 20, Nabe 13 und Ausrückring 16 darstellt.

Der Schnitt A-A verläuft durch zwei Zapfen 22 hindurch. Hierbei berührt der radial innenliegende Bereich der Tellerfedern 30 die Außenmantelfläche des Zapfens 22 nicht. In Schnitt A-A ist des Weiteren eine Vorspannfeder 14 dargestellt, die innerhalb einer Druckkammer 11 angeordnet ist. Zum Bewegen der Lagerung 20, also zum Betätigen der Kupplung, wird die Druckkammer 11 mit Druckluft beaufschlagt. Der Fluiddruck innerhalb der Druckkammer 11 wirkt dabei auf einen Kolben 12, welcher in einer Kraftwirkungskette mit der Lagerung 20 steht. Um innerhalb dieser Kraftwirkungskette auch ohne Überdruck innerhalb der Druckkammer 11 eine gewünschte Vorspannung zu erreichen, ist die Vorspannfeder 14 innerhalb der Druckkammer 11 angeordnet. In dem in Fig. 1 gezeigten Zustand liegt innerhalb der Druckkammer 11 entweder kein Überdruck vor, oder lediglich ein geringer Überdruck, der die Tellerfedern 30 entweder nicht oder nur sehr gering verformt. Das Volumen der Druckkammer 11 in diesem Zustand wird als minimales Volumen definiert.

In einem weiteren nicht gezeigten Ausführungsbeispiel ist keine Vorspannfeder 14 innerhalb der Kraftfahrzeugkupplung zum Vorspannen der Kraftwirkungskette vorhanden.

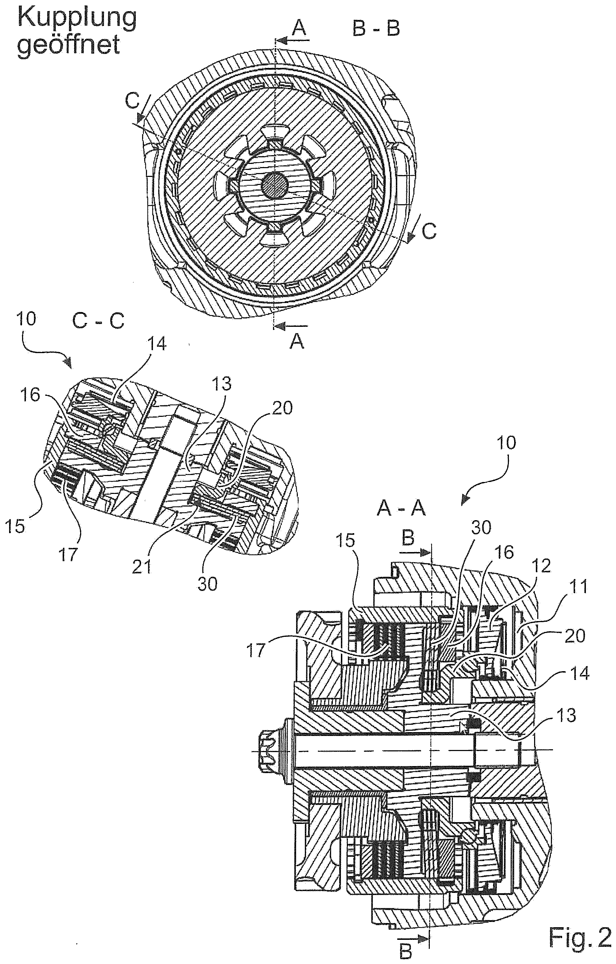

**Fig. 2** stellt die Kupplungsvorrichtung 10 aus Fig. 1 mittels identischer Schnitte dar. Folglich werden nur die Unterschiede zu der Darstellung aus Fig. 1 erläutert. Es wird allerdings ein anderer Zustand gezeigt, nämlich der Zustand mit geöffneter Kupplung. Auf die Darstellung des Schnittes B-B wird nicht näher eingegangen, da sich in dieser Ansicht keine Änderungen zu dem Schnitt B-B aus Fig. 1 ergeben. Zum Betätigen der Kupplung, in diesem Fall zum Öffnen der Kraftfahrzeugkupplung 10, wurde die Drucckammer 11, ausgehend von dem Zustand aus Fig. 1, mit Druckluft beaufschlagt, wodurch sich der Kolben 12 (bezüglich Schnittansicht A-A) mit der Lagerung 20 nach links bewegt hat, bis diese axial an die Nabe 13 angeschlagen ist. Hierdurch wurden die Tellerfedern 30 verkippt. Genauer gesagt wurde der radial innenliegende Bereich der Tellerfedern 30 (bezüglich Schnittansicht A-A) nach links verschoben, wobei der radial außenliegende Bereich der Tellerfedern 30 an der Position der axial unverschieblichen Nabe 13 verblieben ist. Hierdurch wurde der Kontaktpunkt zwischen Tellerfedern 30 und Ausrückring 16 ebenfalls nach links verschoben, wodurch der Kupplungskorb 15 nach links verschoben wurde. Dadurch wurde das Lamellenpaket 17 entlastet, die Innenlamellen und die Außenlamellen können sich in dem in Fig. 2 gezeigten Zustand folglich unabhängig voneinander drehen, die Kupplung ist geöffnet.

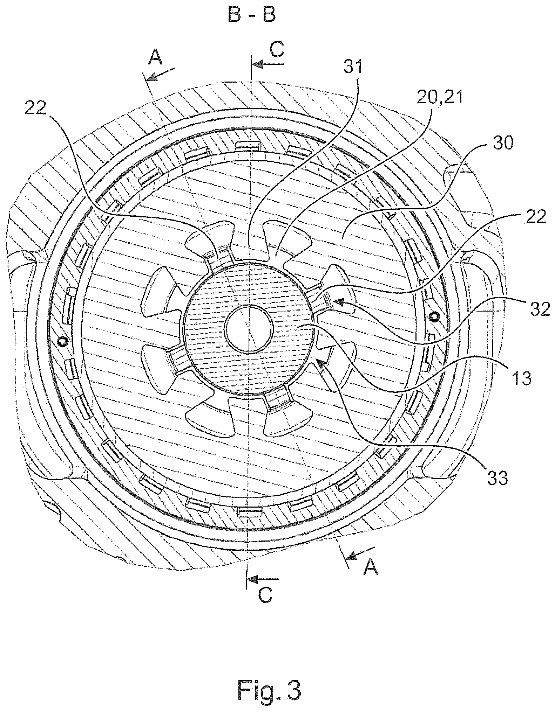

**Fig. 3** zeigt die Schnitte B-B aus Fig. 1 und aus Fig. 2 in einer Detailansicht, wobei die Schnitte A-A und C-C zwar an einer anderen Position eingezeichnet sind, der Schnitt A-A allerdings trotzdem einen Schnitt durch die Zapfen 22 kennzeichnet, und Schnitt C-C einen Schnitt durch die Federzungen 31.

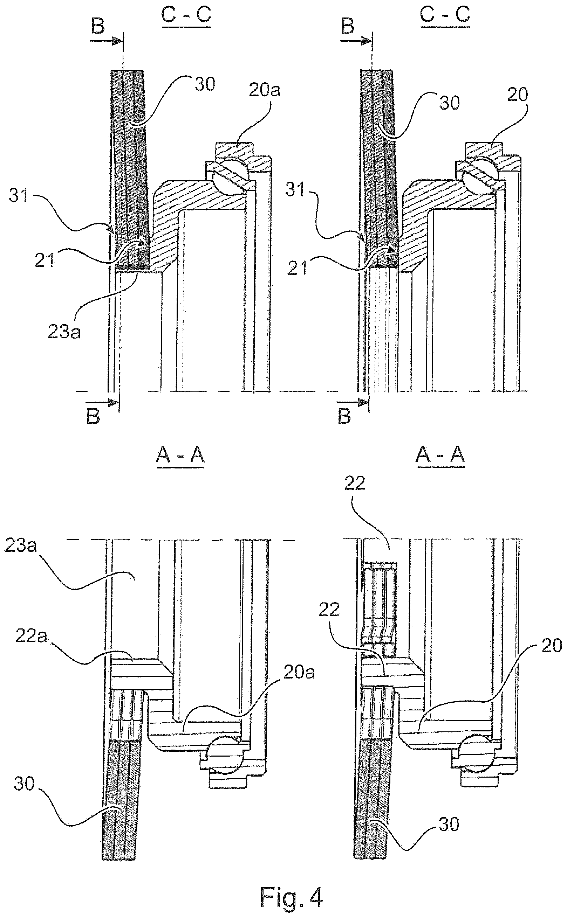

**Fig. 4** zeigt die Schnitte C-C und A-A aus Fig. 3. Die Schnitte C-C und A-A auf der rechten Seite der Fig. 4 zeigen dabei das Ausführungsbeispiel der Lagerung 20 aus den vorhergehenden Figuren, allerdings sind lediglich die Bauteile Lagerung 20 sowie die Tellerfedern 30 dargestellt. Im Schnitt C-C (oben rechts) wurde durch die Federzungen 31 geschnitten. Diese liegen in axialer Richtung an der Kontaktfläche 21 der Lagerung 20 an. Die Lagerung 20 erstreckt sich hierbei nicht in den radial innenliegenden Bereich der Tellerfedern 30 bzw. der Federzungen 31 hinein.

Die Schnitte C-C und A-A auf der linken Seite der Fig. 4 zeigen ein alternatives Ausführungsbeispiel der Lagerung 20, nämlich die Lagerung 20a. Diese Lagerung 20a ist zu der oben beschriebenen Lagerung 20 identisch, allerdings erstreckt sich bei der Lagerung 20a von einer Kontaktfläche 21a (die der Kontaktfläche 21 des vorhergehenden Ausführungsbeispiels entspricht) ein zylindrischer Kragen 23a in axialer Richtung, und erstreckt sich hierbei in den radial innenliegenden Bereich der Tellerfedern 30 bzw. der Federzungen 31 hinein. Folglich erstreckt sich der zylindrische Kragen 23a (in vertikaler bzw. radialer Richtung gesehen) zwischen dem radial innenliegenden Bereich der Tellerfedern 30 (genauer der Federzungen 31) und der nicht dargestellten Nabe 13.

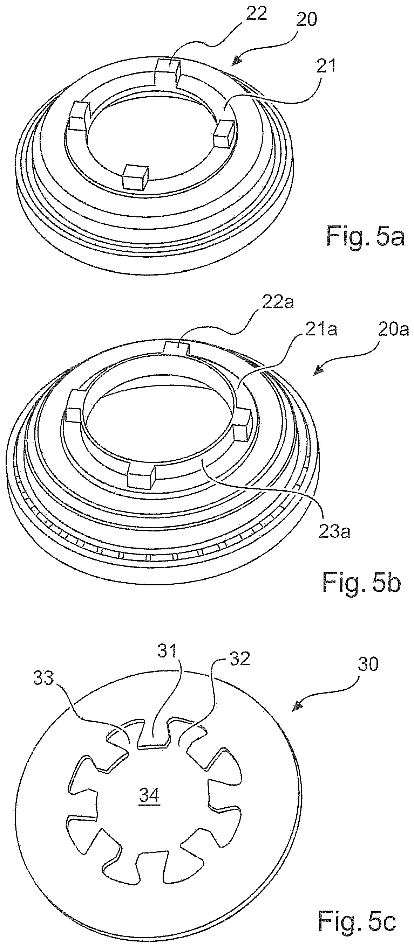

**Fign. 5a, 5b und 5c** zeigen isometrische Ansichten des Lagers 20 (Fig. 5a), des Lagers 20a (Fig. 5b) und einer der Tellerfedern 30. In Fig. 5 sind vier Zapfen 22 dargestellt, die sich von der Kontaktfläche 21 in axialer Richtung erstrecken. Fig. 5a zeigt das alternative Ausführungsbeispiel der Lagerung 20, nämlich die Lagerung 20a. An deren Zapfen 22a, bzw. am radial innenliegenden Bereich der Zapfen 22a, erstreckt sich der Kragen 23a in einer zylinderförmigen Gestalt. Fig. 5c zeigt eine der Tellerfedern 30 mit ihren Federzungen 31, den Ausnehmungen 32 (zwischen den Federzungen) zum Aufnehmen eines Zapfens 22, 22a, wobei die Geometrie der Ausnehmungen 32 sowie die Geometrie der Zapfen 22, 22a aneinander angepasst sind, sowie den Zwischenräumen 33 (zwischen den Federzungen), die kleiner sind als die Ausnehmungen 32, wobei die Geometrie der Zwischenräume 33 und die Geometrie der Zapfen 22, 22a nicht aneinander angepasst sind.

Die Zapfen 22, 22a entsprechen jeweils einem Ausrichtungselement zum Ausrichten und Zentrieren der Tellerfeder(n) 30 auf der Lagerung 20, 20a.

### BEZUGSZEICHENLISTE

- 10: Kraftfahrzeugkupplung
- 11: Druckkammer
- 12: Kolben
- 13: Nabe
- 14: Vorspannfeder
- 15: Kupplungskorb
- 16: Ausrückring
- 17: Lamellenpaket
- 20,20a: Lagerung
- 21, 21a: Kontaktfläche
- 22, 22a: Zapfen (an Kontaktfläche der Lagerung); Ausrichtungselement
- 23a: Kragen
- 30: Tellerfeder
- 31: Federzungen
- 32: Ausnehmung (zwischen Federzungen)
- 33: Zwischenräume (zwischen Federzungen)

## Patentansprüche

1. Kraftfahrzeugkupplung (10) zum kraftschlüssigen Verbinden und Trennen eines Antriebsaggregats mit/von einem Hilfsaggregat, aufweisend
eine Lagerung (20, 20a) zum Übertragen einer Axialkraft auf wenigstens eine Tellerfeder (30) mittels einer Kontaktfläche (21, 21a), zum Betätigen der Kupplung, wobei die Tellerfeder (30) radial nach innen ragende Federzungen (31) aufweist, welche Ausnehmungen (32) zwischeneinander aufweisen, wobei die Lagerung (20, 20a) zum radial unverschieblichen sowie drehfesten Festlegen der Tellerfeder (30) Zapfen (22, 22a) aufweist, die sich von der Kontaktfläche (21, 21a) in axialer Richtung der Kraftfahrzeugkupplung (10) erstrecken und dazu eingerichtet sind, von den Ausnehmungen (32) zwischen den Federzungen (31) aufgenommen zu werden und mit diesen in Eingriff zu stehen, und **dadurch gekennzeichnet, dass**
die Kraftfahrzeugkupplung (10) des Weiteren eine Nabe (13) aufweist, wobei die Kraftfahrzeugkupplung (10) so konstruiert ist, dass die Nabe (13) bei einer axialen Bewegung der Lagerung (20, 20a) zum Öffnen der Kraftfahrzeugkupplung (10) als Anschlag für die Lagerung (20, 20a) dient.

2. Kraftfahrzeugkupplung (10) gemäß des vorhergehenden Anspruchs, wobei
die Lagerung (20a) an ihrem Innenumfang einen sich in axialer Richtung erstreckenden Kragen (23a) aufweist, der sich durch die innere Öffnung (34) der Tellerfeder (30) hindurch erstreckt.

3. Kraftfahrzeugkupplung (10) gemäß einem der vorhergehenden Ansprüche, wobei
das Antriebsaggregat eine Verbrennungskraftmaschine ist, wobei das Hilfsaggregat ein Kompressor ist.

4. Kraftfahrzeugkupplung (10) gemäß einem der Ansprüche 1 oder 2, wobei die Lagerung (20, 20a) vom Typ eines Kugellagers oder Wälzlagers ist.

## Claims

1. A motor vehicle clutch (10) for the force-fit connection and separation of a drive unit to/from an auxiliary unit, having
a bearing (20, 20a) for transmitting an axial force to at least one plate spring (30) by means of a contact face (21, 21a) in order to actuate the clutch, the plate springs (30) having radially inwardly projecting spring tongues (31) that have recesses (32) between them,
the bearing (20, 20a) having pins (22, 22a) for fixing the plate springs (30) rotationally conjointly such that they are unable to move radially, these pins (22, 22a) extending from the contact face (21, 21a) in the axial direction of the motor vehicle clutch (10) and being arranged so as to be received in the recesses (32) between the spring tongues (31) and to engage in them (32),
**characterised in that**
the motor vehicle clutch (10) also has a hub (13), the motor vehicle clutch (10) being designed such that when the bearing (20, 20a) moves axially to open the motor vehicle clutch (10) the hub (13) serves as a stop for the bearing (20, 20a).

2. A motor vehicle clutch (10) according to the preceding claim, the bearing (20a) having on its inner circumference a collar (23a) that extends in an axial direction through the inner opening (34) in the plate springs (30).

3. A motor vehicle clutch (10) according to any one of the preceding claims, the drive unit being an internal combustion engine and the auxiliary unit being a compressor.

4. A motor vehicle clutch (10) according to either of claims 1 or 2, the bearing (20, 20a) being of a ball-bearing type or a roller-bearing type.

## Revendications

1. Embrayage (10) de véhicule automobile pour relier à coopération de forces un groupe d'entraînement à un groupe auxiliaire et pour l'en séparer, comportant
un agencement (20, 20a) de palier pour la transmission d'une force axiale à au moins un ressort (30) à disque au moyen d'une surface (21, 21a) de contact, afin d'actionner l'embrayage, dans lequel le ressort (30) à disque a des languettes (31) de ressort faisant saillie vers l'intérieur radialement, qui ont entre elles des évidements (32),
dans lequel
l'agencement (20, 20a) de palier a, pour la fixation sans possibilité de coulissement radial ainsi que d'une manière solidaire en rotation des ressorts (30) à disque, des tenons (22, 22a), qui s'étendent à partir de la surface (21, 21a) de contact dans la direction axiale de l'embrayage (10) de véhicule automobile et qui sont conçus pour être reçus par les évidements (32) entre les languettes (31) de ressort et pour être en prise avec celles-ci, et
**caractérisé en ce que**
l'embrayage (10) du véhicule automobile a en outre un moyeu (13), dans lequel l'embrayage (10) du véhicule automobile est construit de manière à ce que le moyeu (13) serve, lors d'un déplacement axial de l'agencement (20, 20a) de palier, pour l'ouverture de l'embrayage (10) du véhicule automobile, de buter à l'agencement (20, 20a) de palier.

2. Embrayage (10) de véhicule automobile suivant la revendication précédente, dans lequel
l'agencement (20a) de palier a, sur son pourtour intérieur, un collet (23a), qui s'étend dans la direction axiale et qui passe dans l'ouverture (34) intérieure du ressort (30) à disque.

3. Embrayage (10) de véhicule automobile suivant l'une des revendications précédentes, dans lequel le groupe d'entraînement est un moteur à combustion interne, le groupe auxiliaire étant un compresseur.

4. Embrayage (10) de véhicule automobile suivant l'une des revendications 1 ou 2, dans lequel l'agencement (20, 20a) de palier est du type d'un palier à billes ou d'un palier à roulements.
